# EUROPEAN PATENT SPECIFICATION

(11) **EP 3 180 590 B1**
(45) Date of publication and mention of the grant of the patent: **09.10.2019**
(21) Application number: 15827362.3
(22) Date of filing: 19.06.2015
(51) Int. Cl.: G01D 5/20

(54) **COMPOSITE MATERIAL MARKING WAVE**
MARKIERUNGSWELLE FÜR VERBUNDWERKSTOFF
ONDE DE MARQUAGE DE MATERIAU COMPOSITE

(30) Priority: 01.08.2014 US 201462032127 P
(43) Date of publication of application: 21.06.2017
(73) Proprietor: Schaeffler Technologies AG & Co. KG, 91074 Herzogenaurach (DE)
(72) Inventor: OHR, Carsten, Charlotte, North Carolina 28226 (US); LEE, Brian, York, South Carolina 29745 (US)
(86) International application number: PCT/US2015/036575
(87) International publication number: WO 2016/018525

(56) References cited:
- EP-A1- 1 120 564
- FR-A1- 2 790 313
- JP-A- 2009 097 896
- US-A- 5 746 452
- US-A- 5 894 219
- US-A- 5 979 248
- US-A1- 2008 285 901
- US-A1- 2010 031 756

## Description

### FIELD OF INVENTION

The present invention relates to a bearing arrangement used to detect torque and angular speed of a supported shaft or bearing ring.

### BACKGROUND

Bearing arrangements including sensors for detecting a position of the bearing are known. Known position sensors for bearing arrangements typically require an inductive sensor and a marking ring including a wavy surface comprised of a ferrous material. The inductive sensor detects a rotational angle position of a shaft or bearing ring connected to the marking ring based on a proximity of the wavy surface to the inductive sensor. Due to the projections and valleys along the wavy surface of the marking ring, the marking ring can collect debris or contaminants, causing interference of the magnetic flux between the ferrous marking ring and the inductive sensor and incorrect position readings. It would be desirable to provide a simple way to prevent the marking ring from collecting debris and contaminants.

EP1120564 discloses a sensor for detecting the angular position of a rotatable member.

### SUMMARY

A position sensor for a bearing arrangement with a simplified configuration that prevents debris and contaminants from adhering to a marking ring is provided. The position sensor includes at least one shaft or bearing ring, an inductive sensor, and a composite marking ring connected to the at least one shaft or bearing ring. The composite marking ring is spaced apart from and aligned with the inductive sensor, and includes a ferrous material ring having a wavy surface with a plurality of projections with valleys therebetween facing the inductive sensor. The inductive sensor detects a rotational angle position of the at least one shaft or bearing ring based on a proximity of the wavy surface to the inductive sensor. An outer layer formed of a filler material is arranged at least on the wavy surface of the ferrous material ring. The filler material comprises a non-ferrous material and the outer layer provides a constant predetermined spacing between the composite marking ring and the inductive sensor.

A method of detecting a rotational angle position of at least one shaft or bearing ring of a bearing arrangement is also provided. The method includes providing at least one shaft or bearing ring, an inductive sensor, and a composite marking ring connected to the at least one shaft or bearing ring, spaced apart from and aligned with the inductive sensor. The composite marking ring includes a ferrous material ring having a wavy surface with a plurality of projections with valleys therebetween facing the inductive sensor. An outer layer formed of a filler material is arranged at least on the wavy surface of the ferrous material ring. The filler material comprises a non-ferrous material and provides a constant predetermined spacing between the composite marking ring and the inductive sensor. The method includes detecting a rotational angle position of the at least one shaft or bearing ring based on a proximity of the wavy surface to the inductive sensor.

### BRIEF DESCRIPTION OF THE DRAWINGS

The foregoing Summary and the following detailed description will be better understood when read in conjunction with the appended drawings, which illustrate a preferred embodiment of the invention. In the drawings:
Figure 1A shows a front plan view of a position sensor according to a first embodiment.
Figure 1B is a cross-sectional view along line 1B-1B in Figure 1A.
Figure 2A shows a top view of a position sensor according to a second embodiment.
Figure 2B shows a front plan view of the position sensor of Figure 2A.
Figure 2C is a cross-sectional view along the line 2C-2C in Figure 2B.
Figure 3A shows a front plan view of a position sensor according to a third embodiment.
Figure 3B is a cross-sectional view along the line 3B-3B in Figure 3A.
Figure 4A shows a top view of a position sensor according to a fourth embodiment.
Figure 4B shows a front plan view of the position sensor of Figure 4A.
Figure 4C is a side cross-sectional view along the line 4C-4C in Figure 4B.
Figure 5 shows a cross-sectional view of a position sensor according to a fifth embodiment.

### DETAILED DESCRIPTION OF THE PREFERRED EMBODIMENTS

Certain terminology is used in the following description for convenience only and is not limiting. The words "front," "rear," "upper" and "lower" designate directions in the drawings to which reference is made. The words "inwardly" and "outwardly" refer to directions toward and away from the parts referenced in the drawings. "Axially" refers to a direction along the axis of a shaft. A reference to a list of items that are cited as "at least one of a, b, or c" (where a, b, and c represent the items being listed) means any single one of the items a, b, or c, or combinations thereof. The terminology includes the words specifically noted above, derivatives thereof and words of similar import.

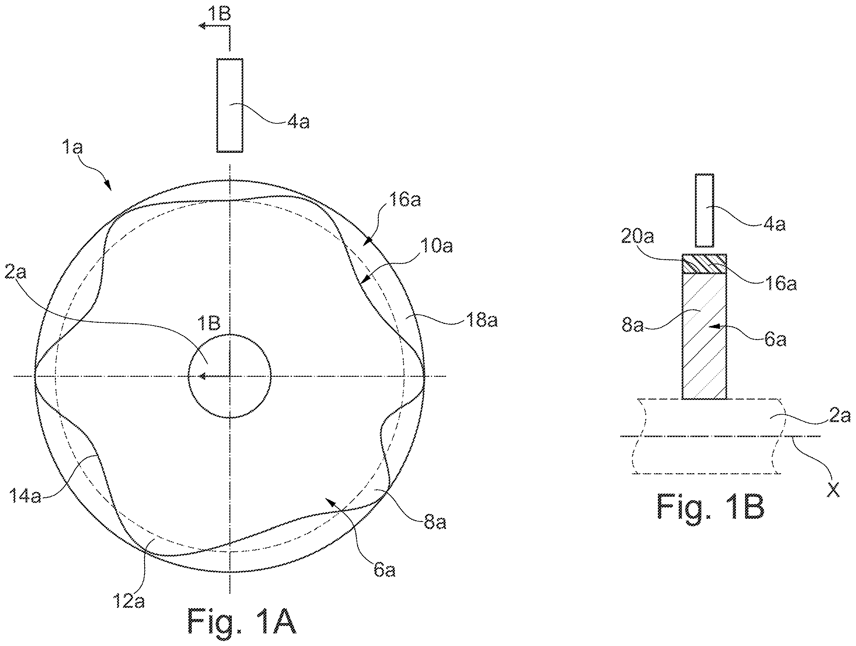

Figures 1A and 1B show a position sensor 1a for a bearing arrangement according to a first embodiment. The position sensor 1a includes at least one shaft or bearing ring 2a (shown in phantom lines), an inductive sensor 4a, and a composite marking ring 6a connected to the at least one shaft or bearing ring 2a. The at least one shaft or bearing ring 2a is shown as a shaft in Figures 1A and 1B, however, one of ordinary skill in the art recognizes a bearing ring could also be used. The composite marking ring 6a is spaced apart from and aligned with the inductive sensor 4a. The composite marking ring 6a includes a ferrous material ring 8a having a wavy surface 10a with a plurality of projections 12a and valleys 14a therebetween facing the inductive sensor 4a. In one embodiment, the ferrous material ring 8a is formed from steel. The inductive sensor 4a detects a rotational angle position of the at least one shaft or bearing ring 2a based on a proximity of the wavy surface 10a to the inductive sensor 4a. An outer layer 16a formed of a filler material 18a is arranged at least on the wavy surface 10a of the ferrous material ring 8a. The filler material 18a comprises a non-ferrous material and the outer layer 16a provides a constant predetermined spacing between the composite marking ring 6a and the inductive sensor 4a. In one embodiment, the filler material 18a is comprised of a polymeric material. In other embodiments, the filler material 18a can be comprised of ceramic or aluminum. In one embodiment, the ferrous material ring 8a and the outer layer 16a are molded together. In another embodiment, the ferrous material ring 8a and the outer layer 16a are cast together. One of ordinary skill in the art recognizes a variety of fastening means, such as baking or sintering, can be used to attach the ferrous material ring 8a and the outer layer 16a.

The outer layer 16a provides a constant outer diameter of the composite marking ring 6a and prevents any debris or contaminants from becoming lodged in and/or adhering to the wavy surface 10a, which can cause imprecise readings due to interference with the magnetic flux between the ferrous material ring 8a and the inductive sensor 4a. As shown in Figures 1A and 1B, the wavy surface 10a is formed on a radially outer surface 20a of the ferrous material ring 8a, and the outer layer 16a forms a constant outer diameter of the composite marking ring 6a.

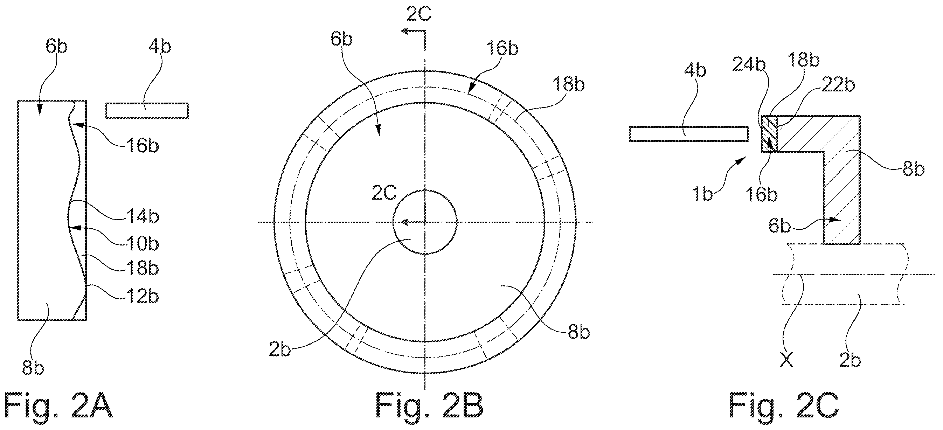

In another embodiment shown in Figures 2A-2C, the wavy surface 10b is formed on an axial end surface 22b of the ferrous material ring 8b, and the outer layer 16b forms a planar axial end surface 24b of the composite marking ring 6b. This arrangement is functionally identical to the arrangement shown in Figures 1A and 1B, except the inductive sensor 4b is spaced axially away from the filler material 18b, composite marking ring 6b, and outer layer 16b.

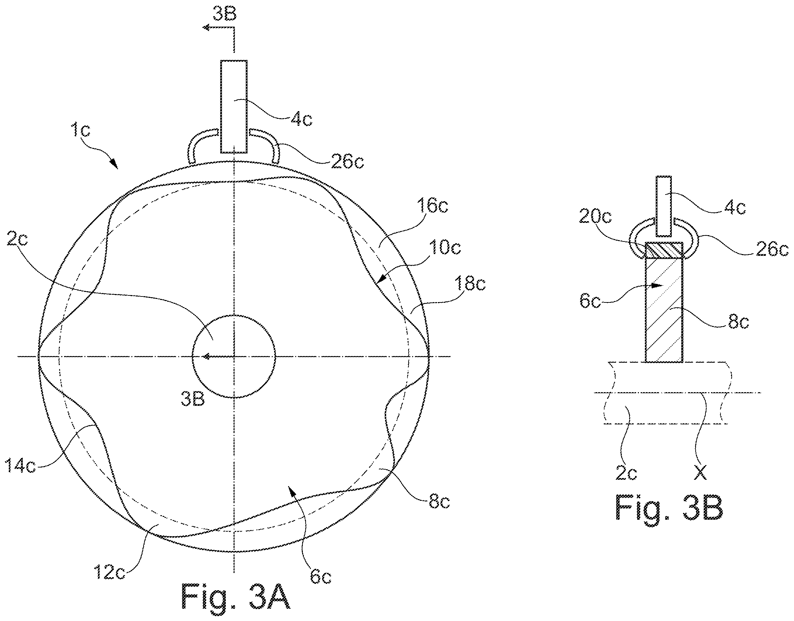

In another embodiment shown in Figures 3A and 3B, a ferrous material ring 8c is provided having filler material 18c on the radially outer surface. A seal 26c is arranged between the outer layer 16c and the inductive sensor 4c. The seal 26c serves as additional protection against any debris or contaminants from entering the space between the inductive sensor 4c and the outer layer 16c. The seal 26c can be formed from a polymeric material, or any other material capable of providing a rigid seal between the surfaces of the inductive sensor 4c and the outer layer 16c.

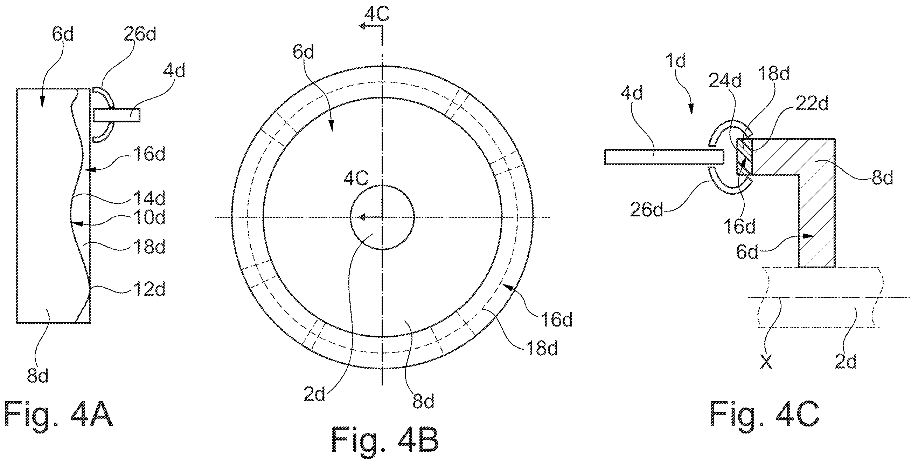

The embodiment shown in Figures 4A-4C is identical to the embodiment shown in Figures 2A-2C, except this embodiment includes a seal 26d. The remaining element numbers are the same, except they are identified with "d". For example, the ferrous material ring 8d corresponds with the ring 8b of the second embodiment. The seal 26d prevents the ingress of any debris or contaminants to the space between the inductive sensor 4d and the planar axial end surface 24d of the composite marking ring 6d.

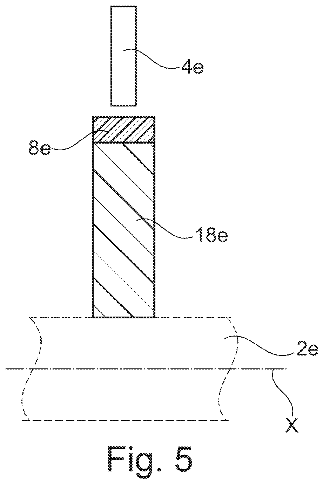

The embodiment shown in Figure 5 is similar to Figure 1B except the filler material and ferrous ring positions are switched. In Figure 5, the filler material 18e is arranged on the at least one shaft or bearing ring 2e, and the ferrous ring 8e is arranged on a radially outer surface of the filler material 18e. One of ordinary skill in the art recognizes the filler material and ferrous ring arrangement shown in Figures 2A-2C could also be switched.

A method of detecting a rotational angle position of at least one shaft or bearing ring 2a-2e of a bearing arrangement 1a-1e is also provided. The method includes providing at least one shaft or bearing ring 2a-2e, an inductive sensor 4a-4e, and a composite marking ring 6a-6e connected to the at least one shaft or bearing ring 2a-2e, spaced apart from and aligned with the inductive sensor 4a-4e. The composite marking ring 6a-6e includes a ferrous material ring 8a-8e having a wavy surface 10a-10e with a plurality of projections 12a-12e with valleys 14a-14e therebetween facing the inductive sensor 4a-4e. An outer layer 16a-16e formed of a filler material 18a-18e is arranged at least on the wavy surface 10a-10e of the ferrous material ring 8a-8e. The filler material 18a-18e comprises a non-ferrous material and provides a constant predetermined spacing between the composite marking ring 6a-6e and the inductive sensor 4a-4e. The method includes detecting a rotational angle position of the at least one shaft or bearing ring 2a-2e based on a proximity of the wavy surface 10a-10e to the inductive sensor 4a-4e.

One of ordinary skill in the art would recognize that a magnetic and non-magnetic material could be used in place of the ferrous and non-ferrous materials described above. A combination of ferrous and magnetic materials could also be used, as long as a contrast in the material properties of the marking rings 6a-6e, rings 8a-8e and the filler components 18a-18e is detectable by the sensor 4a-4e as discussed above.

Having thus described the presently preferred embodiments in detail, it is to be appreciated and will be apparent to those skilled in the art that many physical changes, only a few of which are exemplified in the detailed description of the invention, could be made without altering the inventive concepts and principles embodied therein. It is also to be appreciated that numerous embodiments incorporating only part of the preferred embodiment are possible which do not alter, with respect to those parts, the inventive concepts and principles embodied therein. The present embodiment and optional configurations are therefore to be considered in all respects as exemplary and/or illustrative and not restrictive, the scope of the invention being indicated by the appended claims rather than by the foregoing description, and all alternate embodiments and changes to this embodiment which come within the meaning and range of said claims are therefore to be embraced therein.

## Claims

1. A position sensor (1a-1d) for a bearing arrangement, the position sensor (1a-1d) comprising:
at least one shaft or bearing ring (2a-2e);
an inductive sensor (4a-4e);
a composite marking ring (6a-6d) connected to the at least one shaft or bearing ring (2a-2e), spaced apart from and aligned with the inductive sensor (4a-4e), the composite marking ring (6a-6d) including a ferrous material ring having a wavy surface (10a-10d) with a plurality of projections (12a-12d) with valleys (14a-14d) therebetween facing the inductive sensor (4a-4e), such that the inductive sensor (4a-4e) detects a rotational angle position of the at least one shaft or bearing ring (2a-2e) based on a proximity of the wavy surface (10a-10d) to the inductive sensor (4a-4e), and
an outer layer formed of a filler material arranged at least on the wavy surface (10a-10d) of the ferrous material ring, the filler material comprises a non-ferrous material and the outer layer (16a-16d) provides a constant predetermined spacing between the composite marking ring (6a-6d) and the inductive sensor (4a-4e).

2. The position sensor (1a-1d) of claim 1, wherein the wavy surface (10a-10d) has an asymmetric profile.

3. The position sensor (1a-1d) of claim 1 or 2, wherein the wavy surface (10a-10d) is formed on a radially outer surface of the ferrous material ring, and the outer layer (16a-16d) forms a constant outer diameter of the composite marking ring (6a-6d).

4. The position sensor (1a-1d) of claim 1 or 2, wherein the wavy surface (10a-10d) is formed on an axial end surface of the ferrous material ring, and the outer layer (16a-16d) forms a planar axial end surface of the composite marking ring (6a-6d).

5. The position sensor (1a-1d) of one of the claims 1 to 4, wherein a seal (26d) is arranged between the outer layer and the inductive sensor (4a-4d.

6. The position sensor (1a-1d) of one of the claims 1 to 5, wherein the filler material comprises a polymeric material.

7. The position sensor (1a-1d) of one of the claims 1 to 6, wherein the ferrous material ring is formed from steel.

8. The position sensor (1a-1d) of one of the claims 1 to 7, wherein the ferrous material ring and the outer layer (16a-16d) are molded together.

9. The position sensor (1a-1d) of one of the claims 1 to 8, wherein the ferrous material ring and the outer layer (16a-16d) are cast together.

10. A method of detecting a rotational angle position of at least one shaft or bearing ring (2a-2e) of a bearing arrangement, the method comprising:
providing at least one shaft or bearing ring (2a-2e), an inductive sensor (4a-4e), a composite marking ring (6a-6d) connected to the at least one shaft or bearing ring (2a-2e), spaced apart from and aligned with the inductive sensor (4a-4e), the composite marking (6a-6d) ring including a ferrous material ring having a wavy surface (10a-10d) with a plurality of projections (12a-12d) with valleys (14a-14d) therebetween facing the inductive sensor (4a-4e), and an outer layer formed of a filler material arranged at least on the wavy surface (10a-10d) of the ferrous material ring, the filler material comprises a non-ferrous material and provides a constant predetermined spacing between the composite marking ring (6a-6d) and the inductive sensor (4a-4e); and
detecting a rotational angle position of the at least one shaft or bearing ring (2a-2e) based on a proximity of the wavy surface (10a-10d) to the inductive sensor (4a-4e).

11. The method of claim 10, wherein the wavy surface (10a-10d) has an asymmetric profile.

## Patentansprüche

1. Positionssensor (1a-1d) für eine Lageranordnung, wobei der Positionssensor (1a-1d) Folgendes umfasst:
mindestens einen Schaft oder Lagerring (2a-2e),
einen induktiven Sensor (4a-4e),
einen mit dem mindestens einen Schaft oder Lagerring (2a-2e) verbundenen Verbundstoff-Markierungsring (6a-6d), der zum induktiven Sensor (4a-4e) beabstandet und mit diesem ausgerichtet ist, wobei der Verbundstoff-Markierungsring (6a-6d) einen Ring aus einem Eisenwerkstoff beinhaltet, der eine gewellte Fläche (10a-10d) mit einer Vielzahl von Erhebungen (12a-12d) mit dazwischenliegenden Vertiefungen (14a-14d) aufweist, die dem induktiven Sensor (4a-4e) zugewandt ist, derart, dass der induktive Sensor (4a-4e) eine Drehwinkelposition des mindestens einen Schafts oder Lagerrings (2a-2e) basierend auf einer Nähe der gewellten Fläche (10a-10d) zum induktiven Sensor (4a-4e) erfasst, und
eine aus einem Füllstoff gebildete Außenschicht, die zumindest auf der gewellten Fläche (10a-10d) des Rings aus dem Eisenwerkstoff angeordnet ist, wobei der Füllstoff einen Nichteisenwerkstoff umfasst und die Außenschicht (16a-16d) eine konstante vorab bestimmte Beabstandung zwischen dem Verbundstoff-Markierungsring (6a-6d) und dem induktiven Sensor (4a-4e) gewährleistet.

2. Positionssensor (1a-1d) nach Anspruch 1, wobei die gewellte Fläche (10a-10d) ein asymmetrisches Profil aufweist.

3. Positionssensor (1a-1d) nach Anspruch 1 oder 2, wobei die gewellte Fläche (10a-10d) auf einer radial außenliegenden Fläche des Rings aus dem Eisenwerkstoff gebildet ist und die Außenschicht (16a-16d) einen konstanten Außendurchmesser des Verbundstoff-Markierungsrings (6a-6d) bildet.

4. Positionssensor (1a-1d) nach Anspruch 1 oder 2, wobei die gewellte Fläche (10a-10d) auf einer axialen Endfläche des Rings aus dem Eisenwerkstoff gebildet ist und die Außenschicht (16a-16d) eine planare axiale Endfläche des Verbundstoff-Markierungsrings (6a-6d) bildet.

5. Positionssensor (1a-1d) nach einem der Ansprüche 1 bis 4, wobei zwischen der Außenschicht und dem induktiven Sensor (4a-4d) eine Dichtung (26d) angeordnet ist.

6. Positionssensor (1a-1d) nach einem der Ansprüche 1 bis 5, wobei der Füllstoff einen Polymerwerkstoff umfasst.

7. Positionssensor (1a-1d) nach einem der Ansprüche 1 bis 6, wobei der Ring aus dem Eisenwerkstoff aus Stahl gebildet ist.

8. Positionssensor (1a-1d) nach einem der Ansprüche 1 bis 7, wobei der Ring aus dem Eisenwerkstoff und die Außenschicht (16a-16d) zusammen geformt sind.

9. Positionssensor (1a-1d) nach einem der Ansprüche 1 bis 8, wobei der Ring aus dem Eisenwerkstoff und die Außenschicht (16a-16d) zusammen vergossen sind.

10. Verfahren zum Erfassen einer Drehwinkelposition mindestens eines Schafts oder Lagerrings (2a-2e) einer Lageranordnung, wobei das Verfahren Folgendes umfasst:
Bereitstellen mindestens eines Schafts oder Lagerrings (2a-2e), eines induktiven Sensors (4a-4e), eines mit dem mindestens einen Schaft oder Lagerring (2a-2e) verbundenen Verbundstoff-Markierungsrings (6a-6d), der zum induktiven Sensor (4a-4e) beabstandet und mit diesem ausgerichtet ist, wobei der Verbundstoff-Markierungsring (6a-6d) einen Ring aus einem Eisenwerkstoff, der eine gewellte Fläche (10a-10d) mit einer Vielzahl von Erhebungen (12a-12d) mit dazwischenliegenden Vertiefungen (14a-14d) aufweist, die dem induktiven Sensor (4a-4e) zugewandt ist, und eine aus einem Füllstoff gebildete Außenschicht beinhaltet, die zumindest auf der gewellten Fläche (10a-10d) des Rings aus dem Eisenwerkstoff angeordnet ist, wobei der Füllstoff einen Nichteisenwerkstoff umfasst und eine konstante vorab bestimmte Beabstandung zwischen dem Verbundstoff-Markierungsring (6a-6d) und dem induktiven Sensor (4a-4e) gewährleistet, und
Erfassen einer Drehwinkelposition des mindestens einen Schafts oder Lagerrings (2a-2e) basierend auf einer Nähe der gewellten Fläche (10a-10d) zum induktiven Sensor (4a-4e).

11. Verfahren nach Anspruch 10, wobei die gewellte Fläche (10a-10d) ein asymmetrisches Profil aufweist.

## Revendications

1. Capteur de position (1a à 1d) pour un agencement de palier, le capteur de position (1a à 1d) comprenant :
au moins un arbre ou une bague de roulement (2a à 2e) ;
un capteur inductif (4a à 4e) ;
une bague de marquage composite (6a à 6d) connectée audit au moins un arbre ou à la bague de roulement (2a à 2e), espacée de et alignée sur le capteur inductif (4a à 4e), la bague de marquage composite (6a à 6d) comprenant une bague en matériau ferreux présentant une surface ondulée (10a à 10d) avec une pluralité de saillies (12a à 12d) avec des creux (14a à 14d) entre celles-ci faisant face au capteur inductif (4a à 4e) de sorte que le capteur inductif (4a à 4e) détecte une position d'angle de rotation dudit au moins un arbre ou de la bague de roulement (2a à 2e) sur la base d'une proximité de la surface ondulée (10a à 10d) par rapport au capteur inductif (4a à 4e), et
une couche extérieure formée à partir d'un matériau de remplissage, agencée au moins sur la surface ondulée (10a à 10d) de la bague en matériau ferreux, le matériau de remplissage comprenant un matériau non ferreux et la couche extérieure (16a à 16d) fournissant un espacement prédéterminé constant entre la bague de marquage composite (6a à 6d) et le capteur inductif (4a à 4e).

2. Capteur de position (1a à 1d) selon la revendication 1, dans lequel la surface ondulée (10a à 10d) présente un profil asymétrique.

3. Capteur de position (1a à 1d) selon la revendication 1 ou 2, dans lequel la surface ondulée (10a à 10d) est formée sur une surface radialement extérieure de la bague en matériau ferreux, et la couche extérieure (16a à 16d) forme un diamètre extérieur constant de la bague de marquage composite (6a à 6d).

4. Capteur de position (1a à 1d) selon la revendication 1 ou 2, dans lequel la surface ondulée (10a à 10d) est formée sur une surface d'extrémité axiale de la bague en matériau ferreux, et la couche extérieure (16a à 16d) forme une surface d'extrémité axiale plane de la bague de marquage composite (6a à 6d).

5. Capteur de position (1a à 1d) selon l'une quelconque des revendications 1 à 4, dans lequel un joint (26d) est agencé entre la couche extérieure et le capteur inductif (4a à 4d).

6. Capteur de position (1a à 1d) selon l'une quelconque des revendications 1 à 5, dans lequel le matériau de remplissage comprend un matériau polymère.

7. Capteur de position (1a à 1d) selon l'une quelconque des revendications 1 à 6, dans lequel la bague en matériau ferreux est formée en acier.

8. Capteur de position (1a à 1d) selon l'une quelconque des revendications 1 à 7, dans lequel la bague en matériau ferreux et la couche extérieure (16a à 16d) sont moulées ensemble.

9. Capteur de position (1a à 1d) selon l'une quelconque des revendications 1 à 8, dans lequel la bague en matériau ferreux et la couche extérieure (16a à 16d) sont coulées ensemble.

10. Procédé de détection d'une position d'angle de rotation d'au moins un arbre ou d'une bague de roulement (2a à 2e) d'un agencement de palier, le procédé comprenant les étapes consistant à :
prévoir au moins un arbre ou une bague de roulement (2a à 2e), un capteur inductif (4a à 4e), une bague de marquage composite (6a à 6d) connectée audit au moins un arbre ou à la bague de roulement (2a à 2e), espacée de et alignée sur le capteur inductif (4a à 4e), la bague de marquage composite (6a à 6d) comprenant une bague en matériau ferreux présentant une surface ondulée (10a à 10d) avec une pluralité de saillies (12a à 12d) avec des creux (14a à 14d) entre celles-ci faisant face au capteur inductif (4a à 4e), et une couche extérieure formée à partir d'un matériau de remplissage, agencée au moins sur la surface ondulée (10a à 10d) de la bague en matériau ferreux, le matériau de remplissage comprenant un matériau non ferreux et fournissant un espacement prédéterminé constant entre la bague de marquage composite (6a à 6d) et le capteur inductif (4a à 4e) ; et
détecter une position d'angle de rotation dudit au moins un arbre ou de la bague de roulement (2a à 2e) sur la base d'une proximité de la surface ondulée (10a à 10d) par rapport au capteur inductif (4a à 4e).

11. Procédé selon la revendication 10, dans lequel la surface ondulée (10a à 10d) présente un profil asymétrique.
